# EUROPEAN PATENT SPECIFICATION

(11) **EP 4 089 016 B1**
(45) Date of publication and mention of the grant of the patent: **12.03.2025**
(21) Application number: 22172395.0
(22) Date of filing: 09.05.2022
(51) Int. Cl.: B64D 13/06

(54) **AIRCRAFT HAVING HUMIDIFICATION SYSTEMS, AND METHODS FOR HUMIDIFYING AN INTERIOR OF AN AICRAFT**
FLUGZEUGE MIT BEFEUCHTUNGSSYSTEMEN UND VERFAHREN ZUR BEFEUCHTUNG EINES FLUGZEUGINNENRAUMS
AVIONS AVEC SYSTÈMES D'HUMIDIFICATION ET PROCÉDÉS POUR HUMIDIFIER UN INTÉRIEUR D'AVION

(30) Priority: 11.05.2021 US 202117302725
(43) Date of publication of application: 16.11.2022
(73) Proprietor: Gulfstream Aerospace Corporation, Savannah, Georgia 31402 (US)
(72) Inventor: PRASAD, Dilip, Savannah, 31402 (US); TATE, Adam, Savannah, 31402 (US)
(74) Representative: LKGlobal UK Ltd.

(56) References cited:
- EP-A1- 3 312 094
- JP-A- 2012 240 526
- US-A- 2 017 027
- US-A- 4 461 155
- US-A1- 2011 180 618

## Description

### TECHNICAL FIELD

The technical field relates generally to humidification systems for vehicles, and more particularly relates to humidification systems that recover water from the air of vehicle interiors and that humidify air supplied to the vehicle interiors with at least a portion of the recovered water.

### BACKGROUND

Vehicles such as aircraft generally utilize either a combination of recycled cabin air and exterior air, or exterior air exclusively to maintain cabin air quality when the aircraft is in operation. During flight, aircraft often maintain high altitudes for extended periods of time and collect exterior air from such ambient environments throughout a substantial portion of the flight. At high altitudes, ambient air has substantially low moisture content. As such, when ambient air from such high altitudes is supplied to the cabin, the moisture content of the cabin air becomes and/or remains relatively low. Low moisture content in cabin air increases the potential for viral spread and decreases the comfort level for passengers and crew aboard the aircraft.

Utilizing a combination of recycled cabin air and exterior air, aircraft attempt to minimize the effects of low moisture content ambient air. However, such attempts do not completely mitigate the issues and can bring about additional consequences of increased viral and bacterial spread as compared to aircraft that utilize exterior air exclusively. With respect to aircraft that utilize exterior air exclusively, a predetermined amount of water can be brought aboard the aircraft to be incorporated into the cabin air throughout flight. Unfortunately, the amount of water necessary to maintain sufficient moisture content of the cabin air throughout the flight adds substantial weight to the aircraft and undue cost to its operation. US 4 461 155 A discloses an aircraft cabin humidification system for humidifying an air mass within said cabin, said system comprising: replacement means for ventilating said cabin with a ram air stream; means for exhausting at least a portion of said air from said cabin; removal means for at least partially removing moisture from said air exhausted from said cabin; recycle means for recycling at least a portion of said moisture from said exhausted air; and humidification means for humidifying said cabin by adding at least a portion of said recycled moisture to said cabin.

Accordingly, it is desirable to provide vehicles including humidification systems, humidification systems for vehicles, and methods for humidifying vehicle interiors that address one or more of the foregoing issues. Furthermore, other desirable features and characteristics of the various embodiments described herein will become apparent from the subsequent detailed description and the appended claims, taken in conjunction with the accompanying drawings and this background.

### SUMMARY

Various non-limiting embodiments of a vehicle, a humidification system for a vehicle having an interior containing interior air, and a method for humidifying an interior of a vehicle are provided herein.

In a first embodiment, a vehicle according to claim 1 is provided.

In another embodiment, a method according to claim 12 is provided.

### BRIEF DESCRIPTION OF THE DRAWINGS

The various embodiments will hereinafter be described in conjunction with the following drawing figures, wherein like numerals denote like elements, and wherein:
FIG. 1 is a schematic view illustrating a vehicle including a humidification system in accordance with an exemplary embodiment;
FIG. 2 is a schematic view illustrating a vehicle including a humidification system in accordance with an exemplary embodiment; and
FIG. 3 is a block diagram illustrating a method for humidifying an interior of a vehicle in accordance with an exemplary embodiment.

### DETAILED DESCRIPTION

The following Detailed Description is merely exemplary in nature and is not intended to limit the various embodiments or the application and uses thereof. Furthermore, there is no intention to be bound by any theory presented in the preceding background or the following detailed description.

The exemplary embodiments taught herein provide a vehicle, for example, an aircraft or the like. The vehicle includes a vehicle structure, such as, for example, an aircraft structure, fuselage, or the like, at least partially surrounding an interior containing interior air. The vehicle further includes a humidification system in fluid communication with a first air stream and the interior. In one example, the vehicle includes an engine that is coupled to the vehicle structure and the vehicle is configured to extract bleed air from the engine as extracted bleed air that forms at least a portion of the first air stream. The humidification system includes a humidifier that is configured to humidify the first air stream to form a humidified air stream. The humidified air stream is introduced into the interior.

The humidification system further includes a water recovery zone that is in fluid communication with the interior to receive the interior air. As used herein, the term "zone" refers to an area(s) including one or more equipment items and/or one or more sub-zones. Equipment items can include one or more heat exchangers, separators, reservoirs, tanks, vessels, heaters, coolers/chillers, pipes, ducts, pumps, compressors, valves, controllers, and the like. Additionally, an equipment item can further include one or more zones or sub-zones. The water recovery zone is configured to condense and separate water from the interior air. In one example, the humidifier is further configured to receive the condensed and separated water from the water recovery zone for humidifying the first air stream.

Advantageously, by configuring the humidifier to humidify the first air stream to form a humidified air stream that is fluidly communicated to the interior, the vehicle provides humidified air to the interior of the vehicle. Further, advantageously, by providing a water recovery zone that is in fluid communication with the interior to receive the interior air and that is configured to condense and separate water from the interior air, water is recovered from the interior air. Still further, advantageously, by configuring the humidifier to receive the condensed and separated water to humidify the first air stream provides recycled utilization of the water, thereby reducing or eliminating the need for carrying additional water aboard the vehicle for humidifying the interior of the vehicle.

As such, advantageously, the total water weight necessary for humidifying the interior is reduced or eliminated compared to other approaches, thereby saving weight and reducing fuel consumption to operate the vehicle. Further, the humidity level of the interior air is improved (e.g., increased), thereby decreasing the potential for viral spread and increasing the comfort level for passengers and crew aboard the vehicle.

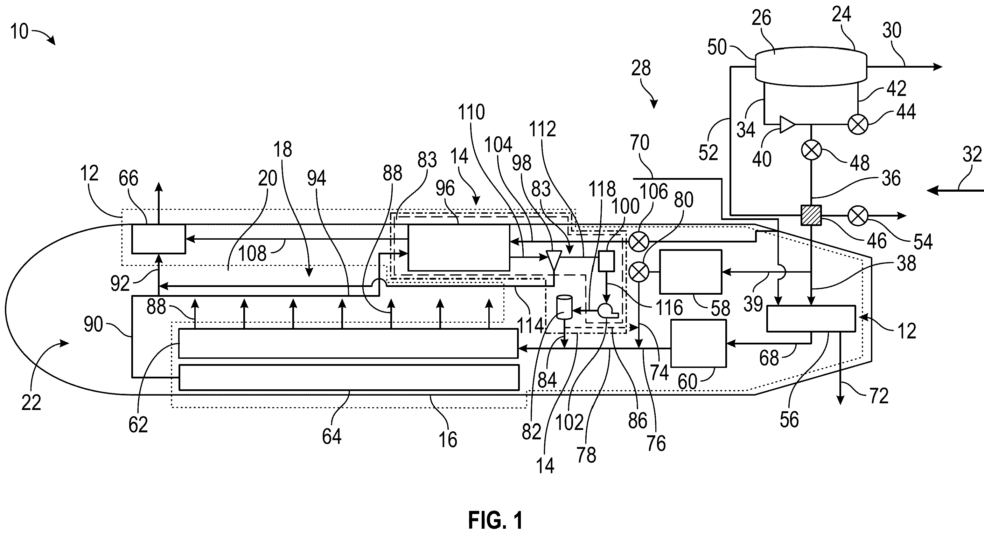

FIG. 1 illustrates a schematic view of a vehicle 10 including an air conditioning system 12 with a humidification system 14 in accordance with an exemplary embodiment. The vehicle 10 includes a vehicle structure 16 at least partially surrounding an interior 18 of the vehicle 10 and containing interior air 20. As illustrated, the vehicle 10 is an aircraft and the vehicle structure 16 is an aircraft structure such as, for example, a fuselage. The interior 18 may include one or more interior areas 22 such as a cabin area, a lavatory area, a cockpit area, and/or the like.

The vehicle 10 includes an engine 24 coupled to the vehicle structure 16 and in fluid communication with the air conditioning system 12. As illustrated, the vehicle 10 includes a singular engine 24, but it is to be understood that various alternate embodiments of the vehicle 10 include a plurality of engines such as two, three, or more engines. The engine 24 is, for example, a turbine engine such as, for example, a turbofan engine. The engine 24 includes one or more compressors 26 and takes in ambient air 28 and pressurizes and combusts at least a portion of the ambient air 28 with fuel in a burner to drive one or more turbines to produce thrust 30 that propels the vehicle 10 in a general forward direction 32.

In an exemplary embodiment, bleed air is extracted from the engine 24 via line 34 and/or line 42 and fluidly communicated to the air conditioning system 12 via lines 36, 38, and 39. The bleed air may be extracted from any of various compressor stage ports of the compressor(s) 26 of the engine 24. For example, bleed air extracted via line 34 corresponds to a lower compressor stage while bleed air extracted via line 42 corresponds to a higher compressor stage. When extracted, the bleed air is at increased pressure and temperature compared to the ambient air 28. For example, at an altitude of about 13716 meters (45 000 feet), the ambient air 26 is at a temperature of about -57°C (-70°F) and a pressure of about 14.5 kPa (2.1 psia) and the extracted bleed air 24 has a temperature of from about 204.4°C (400°F) to about 408.8°C (800°F) and a pressure of from about 689 kPa (100 psig) to about 1034 kPa (150 psig) when extracted from a low stage of the compressor 26 and a temperature of from about 315.6°C (600°F) to about 631.2°C (1200°F) and a pressure of from about 1724 kPa (250 psig) to about 3447 kPa (500 psig) when extracted from a high stage of the compressor 26.

As discussed above, bleed air is extracted either from a lower compressor stage via line 34 or a higher compressor stage via line 42. In an exemplary embodiment, a check valve 40 moderates the flow of the extracted bleed air when extracted via line 34 and a control valve 44 moderates the flow of the extracted bleed air when extracted via line 42. The check valve 40 also prevents reverse flow between the higher compressor stage and the lower compressor stage. In an exemplary embodiment, bleed air from the higher compressor stage may be routed from the engine 24 via line 42 that includes the control valve 44 for regulating the flow rate of bleed air from the engine 24 for operating cases where lower stage extraction via line 34 would be insufficient for bleed air system demand. Bleed air extracted via line 42 and/or bleed air extracted via line 34 is routed to a heat exchanger 46 via line 36. A control valve 48 regulates the pressure of bleed air to the heat exchanger 46 via line 36. In an exemplary embodiment, the regulated pressure from the control valve 48 to line 36 is in the range of 241-414 kPa (35-60 psig).

In an exemplary embodiment, the heat exchanger 46 is a single pass cross flow plate/fin stack heat exchanger 46. The heat exchanger 46 provides the air conditioning system 12 with the extracted bleed air at a regulated temperature and pressure. For example, the extracted bleed air communicated via line 36 to the heat exchanger 46 is cooled by the heat exchanger 46 to a temperature of about 204.4°C (400°F) under normal dual engine bleed operation, or 260°C (500°F) during certain single engine bleed conditions and is then passed along to the air conditioning system via line 38. In an exemplary embodiment, the engine 24 includes a fan 50 and engine fan air is extracted via line 52 and fluidly communicated to the heat exchanger 46 for cooling the extracted bleed air. The heat exchanger 46 may be operably coupled to a control valve 54 that regulates the flow rate of engine fan air through the heat exchanger 46 with the exchanged fan air being exhausted overboard. Additionally, and in accordance with an exemplary embodiment, the heat exchanger 46 may include additional valves, controls, and or sensors to assist in regulating the temperature and pressure of the extracted bleed air for fluid communication to the air conditioning system 12.

The air conditioning system 12 includes an environmental control system 56, manifolds 58 and 60, a vehicle supply duct 62, the humidification system 14, a vehicle exhaust duct 64, and a valve 66 that are in fluid communication. As discussed above, the extracted bleed air is fluidly communicated from the engine 24 to the air conditioning system via lines 34, 36, 38, and 39. In an exemplary embodiment, a portion of the extracted bleed air advanced from the heat exchanger 46 via line 38 is received by the environmental control system 56 and another portion of the extracted bleed air advanced from the heat exchanger 46 is received by the manifold 58 via line 39. The environmental control system 56 includes an ozone converter, heat exchanger(s), control valve(s), control sensor(s), and/or refrigeration cycle(s) that are cooperatively configured to purify, cool and depressurize the extracted bleed air advanced to the environmental control system 56 via line 38 to form purified, cooled, depressurized air that is passed along to the manifold 60 via line 68. For example, the purified, cooled, depressurized air advanced to the manifold 60 via line 68 is purified, cooled, and depressurized by the environmental control system 56 to a temperature of from about -4.4°C (24°F) to about 2.8°C (37°F) and to a pressure of about 103.4 kPa (15 psia) provided to the manifold 60. In an exemplary embodiment, the environmental control system 56 is configured to receive ambient air 28 via line 70 for cooling and/or depressurizing the extracted bleed air. The ambient air 28 advanced to the environmental control system 56 via line 70 is then exhausted back out of the vehicle 10 via line 72.

The manifold 58 and the manifold 60 are cooperatively configured to supply the extracted bleed air via line 74 and the purified, cooled, depressurized air via line 76, respectively, that are mixed or combined together downstream to form a mixed air stream at line 78 and advanced therefrom to the vehicle supply duct 62. In an exemplary embodiment, along line 74 is a control valve 80 that regulates the flow rate of extracted bleed air out of the manifold 58 for controlling the temperature of the mixed air stream (combined with the cold stream 76) along line 78. In an exemplary embodiment, the mixed air stream has a temperature of from about -4.4°C (24°F) to about 82.2°C (180°F) and a pressure of from about 103.4 kPa (15 psia) to about 117.2 kPa (17 psia).

As illustrated, the humidification system 14 includes a humidifier 82 and a water recovery zone 83 that will be discussed in further detail below. The humidification system 14 is in fluid communication with at least one of the mixed air stream of line 78 and the purified, cooled, depressurized air stream of line 74. Additionally, the humidification system 14 is in fluid communication with the interior 18 as will be discussed in further detail below. In an exemplary embodiment, the humidifier 82 is configured to humidify the mixed air stream via line 84 to form a humidified air stream. In an alternate embodiment, the humidifier 82 is configured to humidify the extracted bleed air at line 74 via line 86. As such, the humidifier 82 is in fluid communication with and humidifies either the extracted bleed air before it is combined with the purified, cooled, depressurized air, or the mixed air stream after combining the extracted bleed air and the purified, cooled, depressurized air. Regardless of which of these air streams the humidifier 82 humidifies, it is to be understood that the air stream received by the vehicle supply duct 62 via line 78 has been humidified by the humidifier 82. In an exemplary embodiment, the humidifier 82 is configured to vaporize, spray, atomize, evaporate, and/or steam water to humidify the respective air stream via line 84 or 86.

The vehicle supply duct 62 is disposed in the interior 18 of the vehicle 10 and, as discussed above, is configured to receive the humidified air stream via line 78. The humidified air stream is advanced into the interior 18 from the vehicle supply duct 62 (indicated by single-headed arrows 88). As such, the vehicle supply duct 62 is configured to introduce the humidified air stream to the interior air 20 of the interior 18. When the humidified air stream is introduced to the interior air 20, the humidified air stream mixes with the interior air 20 to regulate, modify, increase, replenish, and/or maintain the moisture level of the interior air 20.

The vehicle 10 further includes a vehicle exhaust duct 64 that is disposed in the interior 18 and that is configured to receive a portion of the interior air 20 from the interior 18. The vehicle exhaust duct 64 is in fluid communication with the valve 66 via lines 90 and 92. As such, the valve 66 is in fluid communication with the interior 18 through the exhaust duct 64. In an exemplary embodiment, the valve 66 is configured to exhaust a portion of the interior air 20 out of the vehicle, for example, to control pressure of the interior air 20 remaining in the interior 18.

The vehicle exhaust duct 64 is in fluid communication with the water recovery zone 83 of the humidification system 14 via lines 90 and 94. In an exemplary embodiment, the water recovery zone 83 includes a heat exchanger 96, a water separator 98, a water reservoir 100, and a pump 102 that are in fluid communication. The vehicle exhaust duct 64 withdraws a portion of interior air 20 from the interior 18 and supplies it to the heat exchanger 96 via lines 90 and 94. As such, the water recovery zone 83 is in fluid communication with the interior 18 to receive interior air 20 through the vehicle exhaust duct 64 via lines 90 and 94.

The heat exchanger 96 is configured to cool the portion of the interior air 20 that is supplied to the heat exchanger 96 via line 94 to form a cooled air stream. In an exemplary embodiment, the temperature of the cooled air stream formed by the heat exchanger 96 is maintained above the freezing point of water at the corresponding pressure to prevent and/or suppress water vapor present in the cooled air stream from forming ice crystals. For example, the heat exchanger 96 cools the received interior air 20 to form the cooled air stream at a temperature of from about 4.4°C (40°F) to about 10°C (50°F) and the pressure is maintained at about 89.6 kPa (13 psia) to about 103.4 kPa (15 psia). The heat exchanger 96 is further configured to receive ambient air 28 via line 104 for cooling the portion of the interior air 20 supplied to the heat exchanger via line 94. In an exemplary embodiment, the portion of the interior air 20 supplied to the heat exchanger 96 via line 94 is cooled by indirect heat exchange with the ambient air 20 supplied to the heat exchanger 96 via line 94. In one example, line 104 includes a control valve 106 that regulates the flow rate of ambient air 20 fluidly communicated to the heat exchanger 96 for cooling. The heat exchanger 96 is in fluid communication with the valve 66 via line 108 and the valve 66 is configured to exhaust the ambient air 20 back out of the vehicle 10 after indirect heat exchange with the portion of the interior air 20 communicated to the heat exchanger 96 via line 94. The heat exchanger 96 is also in fluid communication with the water separator 98 to supply the water separator 98 with the cooled air stream via line 110.

The water separator 98 is configured to receive the cooled air stream via line 110 and condense and separate water from the cooled air stream and form a cooled, dehumidified air stream. In an exemplary embodiment, the water separator 98 is a centrifugal water separator or the like. The water condensed and separated from the cooled air stream is fluidly communicated to the water reservoir 100 via line 112 and the cooled, dehumidified air stream is fluidly communicated to the valve 66 via line 114. As illustrated, the valve 66 exhausts the cooled, dehumidified air stream back out of the vehicle 10.

The water reservoir 100 is configured to receive the condensed and separated water from the water separator 98 via line 112. Additionally, the water reservoir 100 is configured to hold the condensed and separated water and, optionally, to hold additional water if needed. In an exemplary embodiment, the water reservoir 100 includes an ultraviolet (UV) light source that is configured to generate UV light for treating the water in the water reservoir 100. For example, the UV light source may be disposed adjacent to and/or in direct contact with the water in the water reservoir 100 and/or in line 83 for treating the water in the water reservoir 100. In an exemplary embodiment, the UV light acts as a disinfection treatment that kills and/or inactivates microorganisms that may be present in the water prior to delivery to pump 102.

The water reservoir 100 is in fluid communication with the pump 102 via line 116 to provide water to the pump 102. The pump 102 advances water to the humidifier 82 via line 118. As such, the pump 102 provides the humidifier 82 with pressurized water for forming the humidified air stream discussed above.

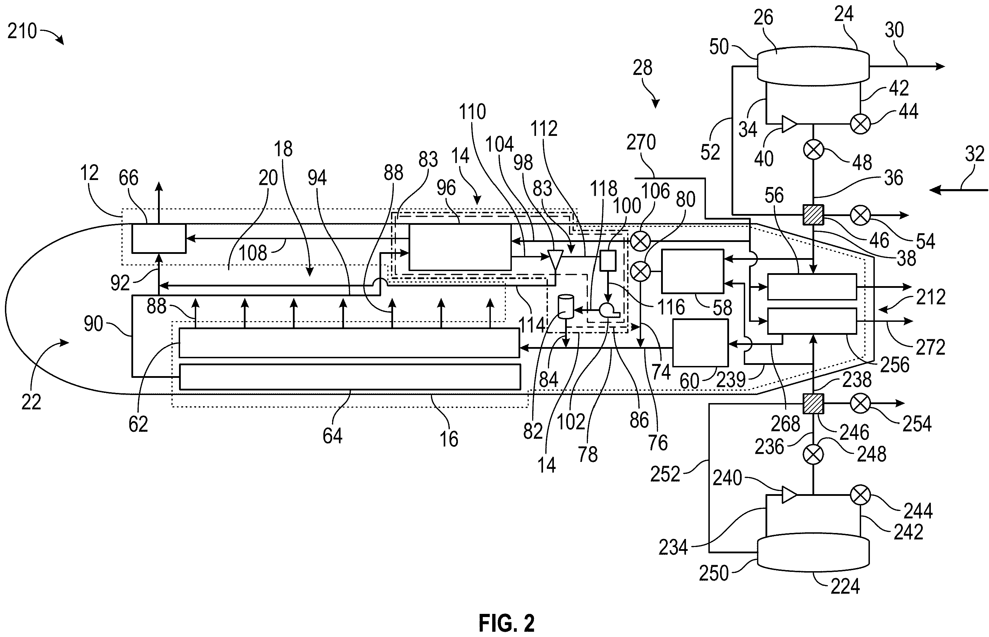

Referring to FIG. 2, a vehicle 210 is similar configured to the vehicle 10 including an air conditioning system 212 with a humidification system 14 but with the exception that the vehicle 210 has multiple engines 24 and 224. In an exemplary embodiment, the engine 224 is similarly configured to the engine 24 discussed above and bleed air is extracted from the engine 224 either via line 234 or via line 242 and is advanced to the vehicle 210 and air conditioning system via lines 236, 238, and 239. A check valve 240 moderates the flow of the extracted bleed air when extracted via line 234 and a control valve 244 moderates the flow of the extracted bleed air when extracted via line 242. The check valve 240 also prevents reverse flow between the higher compressor stage and the lower compressor stage. In an exemplary embodiment, bleed air from the higher compressor stage may be routed from the engine 224 via line 242 that includes the control valve 244 for regulating the flow rate of bleed air from the engine 224 for operating cases where lower stage extraction via line 234 would be insufficient for bleed air system demand. Bleed air extracted via line 242 and/or bleed air extracted via line 234 is routed to a heat exchanger 246 via line 236. A control valve 48 regulates the pressure of bleed air to the heat exchanger 246 via line 236. In an exemplary embodiment, the regulated pressure from the control valve 248 to line 236 is in the range of 241-414 kPa (35-60 psig).

In an exemplary embodiment, the heat exchanger 246 is a single pass cross flow heat exchanger 246. The heat exchanger 246 provides the air conditioning system 212 with the extracted bleed air at a regulated temperature. For example, the extracted bleed air communicated via line 236 to the heat exchanger 246 is cooled by the heat exchanger 246 to a temperature of about 204.4°C (400°F) and a pressure of about 275.8-414 kPa (40-60 psig) and is then communicated to the air conditioning system via line 238. In an exemplary embodiment, the engine 224 includes a fan 250 and engine fan air is extracted via line 252 and fluidly communicated to the heat exchanger 246 for cooling the extracted bleed air. The heat exchanger may further include a control valve 254 that regulates the flow rate of engine fan air through the heat exchanger 246. Fan air from control valve 254 is then exhausted out of the vehicle 210 to the ambient environment. Additionally, and in accordance with an exemplary embodiment, the heat exchanger may include additional valves, controls, and or sensors to assist in regulating the temperature and pressure of the extracted bleed air for fluid communication to the air conditioning system 212.

The air conditioning system 212 is similarly configured to the air conditioning system 12 but with the exception that the air conditioning system 212 further includes an additional environmental control system 256. As discussed above, the extracted bleed air is fluidly communicated from the engine 224 to the air conditioning system via lines 234, 236, 238, and 239. In an exemplary embodiment, a portion of the extracted bleed air communicated from the heat exchanger 246 via line 238 is received by the environmental control system 256 and another portion of the extracted bleed air communicated from the heat exchanger 246 is received by the manifold 58 via line 239. The environmental control system 256 includes an ozone converter, heat exchanger(s), control valve(s), control sensor(s), and/or refrigeration cycle(s) that are cooperatively configured to purify, cool and depressurize the extracted bleed air communicated to the environmental control system 256 via line 238 to form purified, cooled, depressurized air that is communicated to the manifold 60 via line 268. For example, the purified cooled, depressurized air communicated to the manifold 60 via line 268 is cooled and depressurized by the environmental control system 256 to a temperature of from about -4.4°C (24°F) to about 2.8 °C (37°F) and to a pressure of about 103.4 kPa (15 psia). In an exemplary embodiment, the environmental control system 256 is configured to receive ambient air 28 via line 270 for cooling the extracted bleed air. The ambient air 28 communicated to the environmental control system 256 via line 270 is then exhausted back out of the vehicle 210 via line 272.

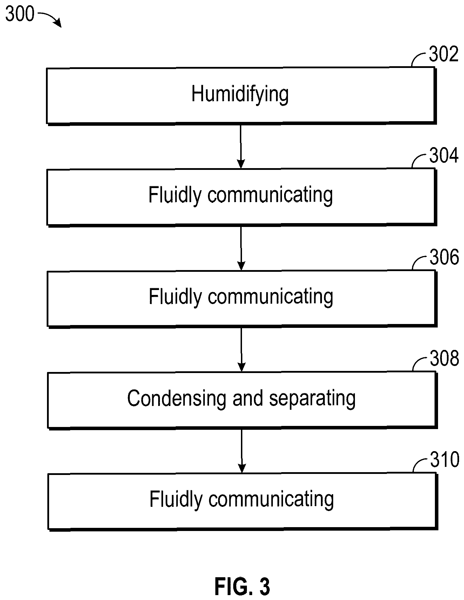

Referring to FIG. 3, a method 300 for humidifying an interior of a vehicle in accordance with an exemplary embodiment is provided. The method 300 includes humidifying (STEP 302) a first air stream with a humidifier to form a humidified air stream. The humidified air stream is fluidly communicated (STEP 304) to interior of the vehicle. The interior air is fluidly communicated (STEP 306) to a water recovery zone. Water is condensed and separated (STEP 308) from the interior air with the water recovery zone. The water is fluidly communicated (STEP 310) from the water recovery zone to the humidifier.

While at least one exemplary embodiment has been presented in the foregoing detailed description of the disclosure, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing an exemplary embodiment of the disclosure. It being understood that various changes may be made in the function and arrangement of elements described in an exemplary embodiment without departing from the scope of the disclosure as set forth in the appended claims.

## Claims

1. A vehicle (10) comprising:
a vehicle structure (16) at least partially surrounding an interior (18), the interior containing interior air (20); and,
a humidification system (14) configured to be in fluid communication with a first air stream and the interior (18), the humidification system comprising:
a humidifier (82) configured to humidify the first air stream to form a humidified air stream that is fluidly communicated to the interior; and
a water recovery zone (83) configured to receive the interior air and to condense and separate water from the interior air, the water recovery zone configured to be in fluid communication with the humidifier and to provide the water to the humidifier,
wherein said vehicle further comprises a valve (66) that is in fluid communication with the interior and that is configured to exhaust a first portion of the interior air out of the vehicle to control pressure of the interior air remaining in the interior; and wherein
the water recovery zone (83) comprises a heat exchanger (96) that is configured to receive the interior air and ambient air from outside the vehicle, the heat exchanger being further configured to cool a second portion of the interior air to form a cooled air stream via indirect heat exchange between the second portion of the interior air and the ambient air.

2. The vehicle of claim 1, wherein the valve (66) is in fluid communication with the heat exchanger (96) to exhaust the ambient air back out of the vehicle after indirect heat exchange with the interior air.

3. The vehicle of claim 2, wherein the water recovery zone (83) further comprises a water separator (98) configured to receive the cooled air stream and condense and separate the water from the cooled air stream and form a cooled, dehumidified air stream.

4. The vehicle of claim 3, wherein the valve (66) is in fluid communication with the water separator (98) to receive the cooled, dehumidified air stream and is configured to exhaust the cooled, dehumidified air stream out of the vehicle.

5. The vehicle of claim 3 or claim 4, wherein the water recovery zone (83) further comprises a water reservoir (100) that is in fluid communication with the water separator (98) and with the humidifier (82), the water reservoir configured to receive the water from the water separator and to hold the water.

6. The vehicle of claim 5, wherein the water reservoir (100) further comprises an ultraviolet (UV) light source that is configured to generate UV light for treating the water that is communicated to the water reservoir, and/or wherein the water recovery zone (83) further comprises a first pump (102) configured to advance the water from the water reservoir to the humidifier.

7. The vehicle of any one of claims 1 to 6, further comprising a vehicle exhaust duct (64) that is disposed in the interior and that is configured to receive the first portion of the interior air from the interior for fluid communication to the valve.

8. The vehicle of any one of claims 1 to 7, wherein the humidifier (82) is further configured to at least one of vaporize, spray, atomize, evaporate, and steam the water to humidify the first air stream.

9. The vehicle of any one of claims 1 to 8 further comprising a vehicle supply duct (62) that is disposed in the interior and that is configured to introduce the humidified air stream to the interior air.

10. The vehicle of any one of claims 1 to 9 further comprising an engine (24) that is coupled to the vehicle structure, and wherein the vehicle is configured to extract bleed air from the engine as extracted bleed air that forms at least a portion of the first air stream.

11. The vehicle of claim 10 further comprising a first manifold (58) disposed in the interior and in fluid communication with the engine (24) to receive a first portion of the extracted bleed air, and optionally further comprising an environmental control system that is in fluid communication with the engine to receive a second portion of the extracted bleed air, and wherein the environmental control system is configured to purify, cool, and depressurize the second portion of the extracted bleed air to form purified, cooled, depressurized air.

12. A method for humidifying an interior of a vehicle (10) which comprises a vehicle structure (16) at least partially surrounding said interior (18) and wherein the interior contains interior air (20), the method comprising the steps of:
humidifying a first air stream with a humidifier (82) to form a humidified air stream;
fluidly communicating the humidified air stream to the interior (18) of the vehicle;
fluidly communicating the interior air (20) to a water recovery zone (83);
condensing and separating water from the interior air with the water recovery zone; and,
fluidly communicating the water from the water recovery zone to the humidifier, wherein the method further comprises the steps of:
exhausting through a valve (66) a first portion of the interior air out of the vehicle to control pressure of the interior air remaining in the interior; and,
cooling a second portion of the interior air received by a heat exchanger (96) which is disposed in the water recovery zone to form a cooled air stream via indirect heat exchange between said second portion of the interior air and ambient air received by the heat exchanger from outside the vehicle.

## Patentansprüche

1. Fahrzeug (10), das Folgendes umfasst:
eine Fahrzeugstruktur (16), die ein Inneres (18) zumindest teilweise umgibt, wobei das Innere Innenluft (20) enthält, und
ein Befeuchtungssystem (14), das dafür konfiguriert ist, in Fluidverbindung mit einem ersten Luftstrom und dem Inneren (18) zu stehen, wobei das Befeuchtungssystem Folgendes umfasst:
eine Befeuchtungseinrichtung (82), die dafür konfiguriert ist, den ersten Luftstrom zu befeuchten, um einen befeuchteten Luftstrom zu bilden, der fluidmäßig zu dem Inneren weitergeleitet wird,
eine Wasserrückgewinnungszone (83), die dafür konfiguriert ist, die Innenluft aufzunehmen und Wasser aus der Innenluft zu kondensieren und abzuscheiden, wobei die Wasserrückgewinnungszone dafür konfiguriert ist, in Fluidverbindung mit der Befeuchtungseinrichtung zu stehen und das Wasser an die Befeuchtungseinrichtung zu liefern,
wobei das Fahrzeug ferner ein Ventil (66) umfasst, das in Fluidverbindung mit dem Inneren steht und das dafür konfiguriert ist, einen ersten Teil der Innenluft aus dem Fahrzeug abzulassen, um einen Druck der Innenluft, die in dem Inneren verbleibt, zu regeln,
und wobei die Wasserrückgewinnungszone (83) einen Wärmetauscher (96) umfasst, der dafür konfiguriert ist, die Innenluft und Umgebungsluft von außerhalb des Fahrzeugs aufzunehmen, wobei der Wärmetauscher ferner dafür konfiguriert ist, über indirekten Wärmeaustausch zwischen dem zweiten Teil der Innenluft und der Umgebungsluft einen zweiten Teil der Innenluft zu kühlen, um einen gekühlten Luftstrom zu bilden.

2. Fahrzeug nach Anspruch 1, wobei das Ventil (66) in Fluidverbindung mit dem Wärmetauscher (96) steht, um die Umgebungsluft nach einem indirekten Wärmeaustausch mit der Innenluft wieder aus dem Fahrzeug abzulassen.

3. Fahrzeug nach Anspruch 2, wobei die Wasserrückgewinnungszone (83) ferner einen Wasserabscheider (98) umfasst, der dafür konfiguriert ist, den gekühlten Luftstrom aufzunehmen und das Wasser aus dem gekühlten Luftstrom zu kondensieren und abzuscheiden, um einen gekühlten, entfeuchteten Luftstrom zu bilden.

4. Fahrzeug nach Anspruch 3, wobei das Ventil (66) in Fluidverbindung mit dem Wasserabscheider (98) steht, um den gekühlten, entfeuchteten Luftstrom aufzunehmen, und dafür konfiguriert ist, den gekühlten, entfeuchteten Luftstrom aus dem Fahrzeug abzulassen.

5. Fahrzeug nach Anspruch 3 oder Anspruch 4, wobei die Wasserrückgewinnungszone (83) ferner ein Wasserreservoir (100) umfasst, das in Fluidverbindung mit dem Wasserabscheider (98) und der Befeuchtungseinrichtung (82) steht, wobei das Wasserreservoir dafür konfiguriert ist, Wasser aus dem Wasserabscheider aufzunehmen und das Wasser zu halten.

6. Fahrzeug nach Anspruch 5, wobei das Wasserreservoir (100) ferner eine Ultraviolett- (UV-) Lichtquelle umfasst, die dafür konfiguriert ist, UV-Licht zum Behandeln des Wassers, das zu dem Wasserreservoir weitergeleitet wird, zu erzeugen, und/oder wobei die Wasserrückgewinnungszone (83) ferner eine erste Pumpe (102) umfasst, die dafür konfiguriert ist, das Wasser von dem Wasserreservoir zu der Befeuchtungseinrichtung zu befördern.

7. Fahrzeug nach einem der Ansprüche 1 bis 6, das ferner eine Fahrzeug-Ablassleitung (64) umfasst, die in dem Inneren angeordnet ist und die dafür konfiguriert ist, den ersten Teil der Innenluft aus dem Inneren für eine Fluidverbindung mit dem Ventil aufzunehmen.

8. Fahrzeug nach einem der Ansprüche 1 bis 7, wobei die Befeuchtungseinrichtung (82) ferner dafür konfiguriert ist, das Wasser mindestens eines von zu verdampfen, zu versprühen, zu zerstäuben, zu verdunsten und sich verflüchtigen zu lassen, um den ersten Luftstrom zu befeuchten.

9. Fahrzeug nach einem der Ansprüche 1 bis 8, das ferner eine Fahrzeug-Zuführungsleitung (62) umfasst, die in dem Inneren angeordnet ist und die dafür konfiguriert ist, den befeuchteten Luftstrom zu der Innenluft einzuleiten.

10. Fahrzeug nach einem der Ansprüche 1 bis 9, das ferner einen Motor (24) umfasst, der an die Fahrzeugstruktur gekoppelt ist, und wobei das Fahrzeug dafür konfiguriert ist, Abzweigluft aus dem Motor als abgezogene Abzweigluft abzuziehen, die zumindest einen Teil des ersten Luftstroms bildet.

11. Fahrzeug nach Anspruch 10, das ferner einen ersten Verteiler (58) umfasst, der in dem Inneren angeordnet ist und in Fluidverbindung mit dem Motor (24) steht, um einen ersten Teil der abgezogenen Abzweigluft aufzunehmen, und das wahlweise ferner ein Umgebungsregelungssystem umfasst, das in Fluidverbindung mit dem Motor steht, um einen zweiten Teil der abgezogenen Abzweigluft aufzunehmen, und wobei das Umgebungsregelungssystem dafür konfiguriert ist, den zweiten Teil der abgezogenen Abzweigluft zu reinigen, zu kühlen und im Druck herabzusetzen, um gereinigte, gekühlte und im Druck herabgesetzte Luft zu bilden.

12. Verfahren zum Befeuchten eines Inneren eines Fahrzeugs (10), das eine Fahrzeugstruktur (16) umfasst, die ein Inneres (18) zumindest teilweise umgibt, und wobei das Innere Innenluft (20) enthält, wobei das Verfahren die folgenden Schritte umfasst:
Befeuchten eines ersten Luftstroms mit einer Befeuchtungseinrichtung (82), um einen befeuchteten Luftstrom zu bilden,
fluidmäßiges Weiterleiten des befeuchteten Luftstroms zu dem Inneren (18) des Fahrzeugs,
fluidmäßiges Weiterleiten der Innenluft (20) zu einer Wasserrückgewinnungszone (83),
Kondensieren und Abscheiden von Wasser aus der Innenluft mit der Wasserrückgewinnungszone und
fluidmäßiges Weiterleiten des Wassers von der Wasserrückgewinnungszone zu der Befeuchtungseinrichtung,
wobei das Verfahren ferner die folgenden Schritte umfasst:
Ablassen eines ersten Teils der Innenluft aus dem Fahrzeug durch ein Ventil (66), um einen Druck der Innenluft, die in dem Inneren verbleibt, zu regeln, und
Kühlen eines zweiten Teils der Innenluft, der durch einen Wärmetauscher (96) aufgenommen wird, der in der Wasserrückgewinnungszone angeordnet ist, um über indirekten Wärmeaustausch zwischen dem zweiten Teil der Innenluft und Umgebungsluft, die durch den Wärmetauscher von außerhalb des Fahrzeugs aufgenommen wird, einen gekühlten Luftstrom zu bilden.

## Revendications

1. Véhicule (10) comprenant :
une structure de véhicule (16) entourant au moins partiellement un intérieur (18), l'intérieur contenant de l'air intérieur (20) ; et,
un système d'humidification (14) configuré pour être en communication fluidique avec un premier flux d'air et l'intérieur (18), le système d'humidification comprenant :
un humidificateur (82) configuré pour humidifier le premier flux d'air afin de former un flux d'air humidifié qui est en communication fluidique avec l'intérieur ; et
une zone de récupération d'eau (83) configurée pour recevoir l'air intérieur et pour condenser et séparer l'eau de l'air intérieur, la zone de récupération d'eau étant configurée pour être en communication fluidique avec l'humidificateur et pour fournir l'eau à l'humidificateur,
ledit véhicule comprenant en outre une soupape (66) qui est en communication fluidique avec l'intérieur et qui est configurée pour évacuer une première partie de l'air intérieur hors du véhicule afin de réguler la pression de l'air intérieur restant dans l'intérieur ;
et la zone de récupération d'eau (83) comprenant un échangeur de chaleur (96) configuré pour recevoir l'air intérieur et l'air ambiant de l'extérieur du véhicule, l'échangeur de chaleur étant en outre configuré pour refroidir une seconde partie de l'air intérieur afin de former un flux d'air refroidi par échange de chaleur indirect entre la seconde partie de l'air intérieur et l'air ambiant.

2. Véhicule selon la revendication 1, dans lequel la soupape (66) est en communication fluidique avec l'échangeur de chaleur (96) pour évacuer l'air ambiant hors du véhicule après échange indirect de chaleur avec l'air intérieur.

3. Véhicule selon la revendication 2, dans lequel la zone de récupération d'eau (83) comprend en outre un séparateur d'eau (98) configuré pour recevoir le flux d'air refroidi et condenser et séparer l'eau du flux d'air refroidi et former un flux d'air refroidi déshumidifié.

4. Véhicule selon la revendication 3, dans lequel la soupape (66) est en communication fluidique avec le séparateur d'eau (98) pour recevoir le flux d'air refroidi et déshumidifié et est configurée pour évacuer le flux d'air refroidi et déshumidifié hors du véhicule.

5. Véhicule selon la revendication 3 ou la revendication 4, dans lequel la zone de récupération d'eau (83) comprend en outre un réservoir d'eau (100) qui est en communication fluidique avec le séparateur d'eau (98) et avec l'humidificateur (82), le réservoir d'eau étant configuré pour recevoir l'eau provenant du séparateur d'eau et pour retenir l'eau.

6. Véhicule selon la revendication 5, dans lequel le réservoir d'eau (100) comprend en outre une source de lumière ultraviolette (UV) qui est configurée pour générer une lumière ultraviolette pour traiter l'eau qui est communiquée au réservoir d'eau, et/ou dans lequel la zone de récupération d'eau (83) comprend en outre une première pompe (102) configurée pour faire avancer l'eau du réservoir d'eau vers l'humidificateur.

7. Véhicule selon l'une quelconque des revendications 1 à 6, comprenant en outre un conduit d'échappement de véhicule (64) qui est disposé à l'intérieur et qui est configuré pour recevoir la première partie de l'air intérieur de l'intérieur pour une communication fluidique avec la soupape.

8. Véhicule selon l'une quelconque des revendications 1 à 7, dans lequel l'humidificateur (82) est en outre configuré pour au moins une des actions suivantes : vaporisation, pulvérisation, atomisation, évaporation et vapeur d'eau pour humidifier le premier flux d'air.

9. Véhicule selon l'une quelconque des revendications 1 à 8, comprenant en outre un conduit d'alimentation de véhicule (62) qui est disposé à l'intérieur et qui est configuré pour introduire le flux d'air humidifié dans l'air intérieur.

10. Véhicule selon l'une quelconque des revendications 1 à 9, comprenant en outre un moteur (24) qui est couplé à la structure du véhicule, et le véhicule étant configuré pour extraire de l'air de prélèvement du moteur en tant qu'air de prélèvement extrait qui forme au moins une partie du premier flux d'air.

11. Véhicule selon la revendication 10, comprenant en outre un premier collecteur (58) disposé à l'intérieur et en communication fluidique avec le moteur (24) pour recevoir une première partie de l'air de prélèvement extrait, et comprenant en outre facultativement un système de contrôle environnemental qui est en communication fluidique avec le moteur pour recevoir une seconde partie de l'air de prélèvement extrait, et dans lequel le système de contrôle environnemental est configuré pour purifier, refroidir et dépressuriser la seconde partie de l'air de prélèvement extrait pour former de l'air dépressurisé au refroidi purifié.

12. Procédé pour humidifier l'intérieur d'un véhicule (10) qui comprend une structure de véhicule (16) entourant au moins partiellement ledit intérieur (18) et dans lequel l'intérieur contient de l'air intérieur (20), le procédé comprenant les étapes consistant à :
humidifier un premier flux d'air avec un humidificateur (82) pour former un flux d'air humidifié ;
mettre en communication fluidique le flux d'air humidifié avec l'intérieur (18) du véhicule ;
mettre en communication fluidique l'air intérieur (20) avec une zone de récupération d'eau (83) ;
condenser et séparer l'eau de l'air intérieur de la zone de récupération d'eau ; et
mettre en communication fluidique l'eau de la zone de récupération d'eau avec l'humidificateur, le procédé comprenant en outre les étapes consistant à :
évacuer par une soupape (66) une première partie de l'air intérieur hors du véhicule afin de réguler la pression de l'air intérieur restant à l'intérieur ; et
refroidir une seconde partie de l'air intérieur reçu par un échangeur de chaleur (96) disposé dans la zone de récupération d'eau pour former un flux d'air refroidi par échange thermique indirect entre ladite seconde partie de l'air intérieur et l'air ambiant reçu par l'échangeur de chaleur de l'extérieur du véhicule.
